# EUROPÄISCHE PATENTSCHRIFT

(11) **EP 0 499 939 B1**
(45) Veröffentlichungstag und Bekanntmachung des Hinweises auf die Patenterteilung: **10.08.1994**
(21) Anmeldenummer: 92102207.5
(22) Anmeldetag: 10.02.1992
(51) Int. Cl.: H04R 25/02

(54) **Ladesystem für implantierbare Hörhilfen und Tinnitus-Maskierer**
Charging system for implantable hearing aids and Tinnitus masks
Dispositif de chargement pour appareils de correction auditive et indication de masque Tinnitus

(30) Priorität: 13.02.1991 DE 4104359
(43) Veröffentlichungstag der Anmeldung: 26.08.1992
(73) Patentinhaber: IMPLEX GmbH Spezialhörgeräte, D-85737 Ismaning (DE)
(72) Erfinder: Baumann, Joachim, Ing., W-8000 München 40 (DE); Leysieffer, Hans, Dr.-Ing., W-8028 Taufkirchen (DE); Hortmann, Günter, Ing., W-7449 Neckartenzlingen (DE)
(74) Vertreter: Schwan, Gerhard, Dipl.-Ing.

(56) Entgegenhaltungen:
- EP-A- 0 242 038
- CH-A- 670 349
- DE-A- 3 840 393

## Beschreibung

Die Erfindung betrifft ein Ladesystem für implantierbare Hörhilfen und Tinnitus-Maskierer mit einer mehrfach wiederaufladbaren Gleichspannungsquelle.

Es sind beispielsweise aus der DE-OS 19 40 803 oder der US-PS 4 134 408 Ladesysteme für die Batterien von Herzschrittmachern bekannt. Das in diesen Systemen zur induktiven Energieübertragung genutzte Verfahren beruht auf zwei gekoppelten Spulen, ähnlich einem Übertrager, wobei die eine Spule implantiert ist und die andere Spule extern in die Nähe der implantierten Spule gebracht werden kann. Die implantierte Spule speist direkt und somit breitbandig eine Gleichrichterschaltung. Diese Art der Energieübertragung erlaubt wegen der schlechten Spulenkopplung nur relativ geringe Ladeströme für die Batterie. Diese waren für die Batterien von Herzschrittmacher ausreichend, da für den Betrieb eines Herzschrittmachers nur wenig Energie vonnöten ist und man daher mit geringen Batteriekapazitäten auskommt. Im Gegensatz dazu hat der Betrieb einer Hörhilfe oder eines Tinnitus-Maskierers einen deutlich höheren Energiebedarf, da diese Geräte permanent aktiv sind.

Ein implantierbares Hörgerät mit mehrfach wiederaufladbarer Gleichspannungsquelle ist aus der DE 39 18 086 C1 bekannt. Das Ladesystem für die Gleichspannungsquelle ist dort aber nicht erläutert.

Aus der CH-A-670 349 ist ein Hörgerät mit drahtlos ferngesteuerter Gerätekomponentenregelung bekannt.

Der Erfindung liegt die Aufgabe zugrunde, ein Ladesystem für die Batterien von implantierten Hörhilfen zu schaffen, das die notwenigen Ladeströme zuverlässig zur Verfügung stellt.

Diese Aufgabe wird erfindungsgemäß durch die Merkmale des Anspruchs 1 gelöst.

Durch die Resonanzkopplung der Spulen des Senderesonanzkreises und des Empfangsresonanzkreises ist eine im Vergleich zu einer Breitbandkopplung wesentlich verbesserte Energieübertragung möglich, so daß die notwendigen Ladeströme für die Batteriekapazitäten einer Hörhilfe bzw. eines Tinnitus-Maskierers zur Verfügung stehen. Der externe Teil des Ladesystems kann ortsfest und netzgebunden oder aber bevorzugt als kleines, portables Gerät mit nachladbaren Batterien ausgeführt sein.

Eine Sendespule des Senderesonanzkreises kann dabei zur Energieübertragung durch die geschlossene Haut (transkutan) vom Körperäußeren ins Körperinnere durch unmittelbares Aufsetzen auf die Körperoberfläche mit einer Empfangsspule des implantierbaren Empfangsresonanzkreises, zweckmäßig konzentrisch, in Deckung bringbar sein. Diese Ausführungsform ist dann zu bevorzugen, wenn der außerhalb des Körpers befindliche (externe) Teil des Ladesystems als kleines, portables und daher ortsungebundenes Gerät ausgeführt wird und die Sendeleistung minimiert werden muß. Eine Anordnung der Sendespule ohne direkten Kontakt zur Körperoberfläche in gewisser Entfernung zur Körperoberfläche ist dann vorzuziehen, wenn der externe Teil des Ladesystems ortsfest und netzgebunden ausgeführt wird und daher größere Sendeleistungen zur Verfügung stehen, die eine berührungslose Nachladung der implantierten Gleichspannungsquelle z.B. während des Schlafes ermöglichen. Vorteilhafterweise ist im implantierbaren Teil des Ladesystems eine Telemetrieschaltung zur Gewinnung von Information über die relative Position der Sendespule zur Empfangsspule und/oder über den Ladezustand der Gleichspannungsquelle vorgesehen. Nach einer weiteren Ausgestaltung der Erfindung kann die Empfangsspule einen über die Spule überstehenden Ferritkern aufweisen, dessen überstehendes Ende zur induktiven und mechanischen Kopplung mit der Sendespule durch die Haut nach außen hindurchführbar ist. Es besteht also die Wahl zwischen einem nach außen überhaupt nicht in Erscheinung tretenden implantierbaren Energieversorgungsteil und einem in der Energieübertragung noch leistungsfähigeren Ladesystem mit nach außen tretendem Ferritkern als Kopplungselement zwischen Sende- und Empfangsspule. Der implantierbare Teil des Ladesystems ist vorteilhafterweise mit einer elektronischen Schaltung ausgestattet, die den Lade- bzw. Entladevorgang der Gleichspannungsquelle steuert bzw. überwacht.

Der Empfangsresonanzkreis, eine Ladeelektronik sowie die Gleichspannungsquelle können zusammen mit der Hörhilfe oder dem Tinnitus-Maskierer in einem gemeinsamen Gehäuse untergebracht sein. Da die derzeit für Hörhilfen insbesondere in Frage kommenden Nickel-Cadmium-Akkumulatoren in Knopfzellenbauweise jedoch nur eine durchschnittliche Lebensdauer von fünf Jahren aufweisen, kann die Gleichspannungsquelle stattdessen auch in einem separaten Gehäuse untergebracht und mit der Hörhilfe bzw. dem Tinnitus-Maskierer lösbar galvanisch verbunden sein. Dadurch kann beim Batteriewechsel ein Austausch des gesamten Systems vermieden werden.

Der implantierbare Teil des Ladesystems kann zur Implantation im Kopfbereich des Patienten, vorzugsweise im Mastoid, ausgelegt sein.

Vorteilhaft ist auch die Anordnung einer Warneinrichtung im implantierbaren Teil des Ladesystems, die Warnsignale in den Signalpfad der Hörhilfe oder des Tinnitus-Maskierers einspeist, sobald der Ladezustand der Gleichspannungsquelle einen Minimalpegel erreicht hat. Der Träger der Hörhilfe wird dadurch mittels akustischer Signale darauf aufmerksam gemacht, daß er die Gleichspannungsquelle seines Gerätes nachladen muß.

Bevorzugte Ausführungsbeispiele der Erfindung sind nachstehend unter Bezugnahme auf die Zeichnungen näher erläutert. Es zeigen:
- Fig. 1: einen Schaltplan eines Ladesystems mit transkutaner Energieübertragung,
- Fig. 2: einen schematischen Schnitt durch ein Ladesystem zur transkutanen Energieübertragung,
- Fig. 3: einen schematischen Schnitt durch eine Empfangs- und Sendespule zur perkutanen Energieübertragung,
- Fig. 4: eine schematische Darstellung einer berührungslosen, induktiven Kopplung zwischen externer Sendespule in Nähe der Körperoberfläche und interner, implantierter Energie-Empfangseinrichtung.

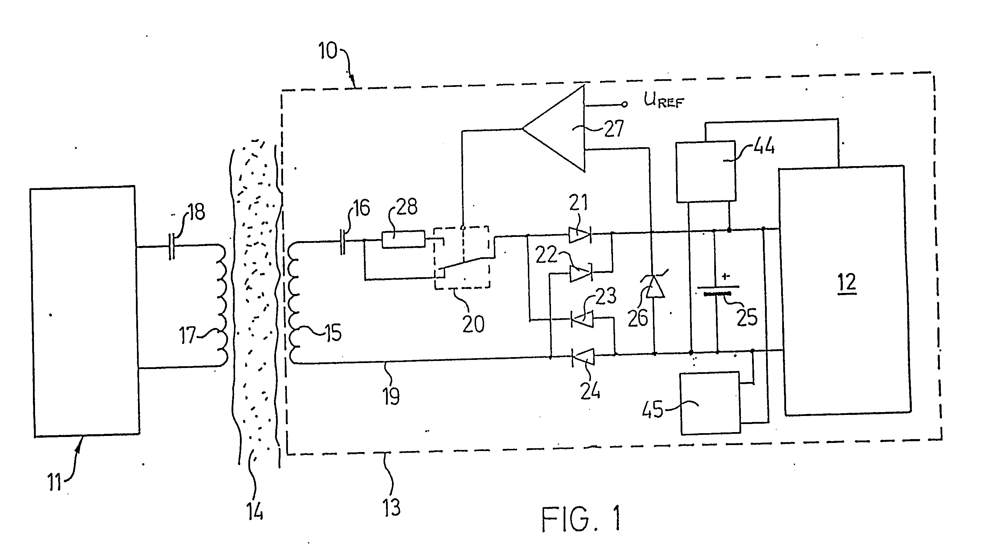

Das in Fig. 1 dargestellte Ladesystem besteht aus einem implantierten Empfangsteil 10 und einem externen Sendeteil 11. Der Empfangsteil 10 ist gemeinsam mit einer Hörhilfe 12 in einem Gehäuse 13 untergebracht, das unter der Haut 14 im Körper angeordnet ist. Der Empfangsteil 10 weist eine Empfangsspule 15 auf, die zusammen mit einem Kondensator 16 einen Serienresonanzkreis bildet, der durch einen im Sendeteil 11 des Ladesystems befindlichen zweiten Serienresonanzkreis, bestehend aus einer Sendespule 17 und einem Kondensator 18 mit gleicher Resonanzlage, angeregt wird. Die Empfangsspule 15 und der Kondensator 16 sind Teile eines Wechselstrom-Ladekreises 19, der sich, wie in Fig. 1 dargestellt, über einen Schalter 20 und je nach Phase über Dioden 21, 24 bzw. 22, 23 und eine Gleichspannungsquelle 25 schließt. Eine Zenerdiode 26 schützt die Gleichspannungsquelle 25 und die nachfolgende Schaltung der Hörhilfe 12 vor zu hoher Spannung des Ladekreises 19. Die Höhe des in der Empfangsspule 15 induzierten Stromes ist von der Größe der im Ladekreis 19 liegenden ohmschen Widerstände, wie dem Wicklungswiderstand der Empfangsspule 15, den differentiellen Widerständen der Dioden 21 bis 24 und dem Innenwiderstand der Gleichspannungsquelle 25, abhängig. Da der Innenwiderstand der Gleichspannungsquelle 25 im Vergleich zu den anderen Widerständen vernachlässigbar klein ist, erfolgt eine Stromeinprägung auf die Gleichspannungsquelle 25. Die Spannung der Gleichspannungsquelle 25 wird während des Ladens über einen Komparator 27 überwacht. Bei Erreichen eines festeingestellten Spannungswertes wird mittels des Schalters 20 ein zusätzlicher Widerstand 28 in den Ladekreis 19 eingeschleift, der den Ladestrom begrenzt.

Bei der in Fig. 1 veranschaulichten Ausführungsform ist ferner eine Warneinrichtung 44 vorgesehen, die in den Signalpfad der Hörhilfe 12 Warnsignale einspeist, sobald der Ladezustand der Gleichspannungsquelle 25 einen vorgegebenen Minimalpegel unterschreitet. Zusätzlich oder stattdessen kann eine Telemetrieschaltung 45 vorgesehen sein, die Informationen über den Ladezustand der Gleichspannungsquelle 25 nach außen gibt.

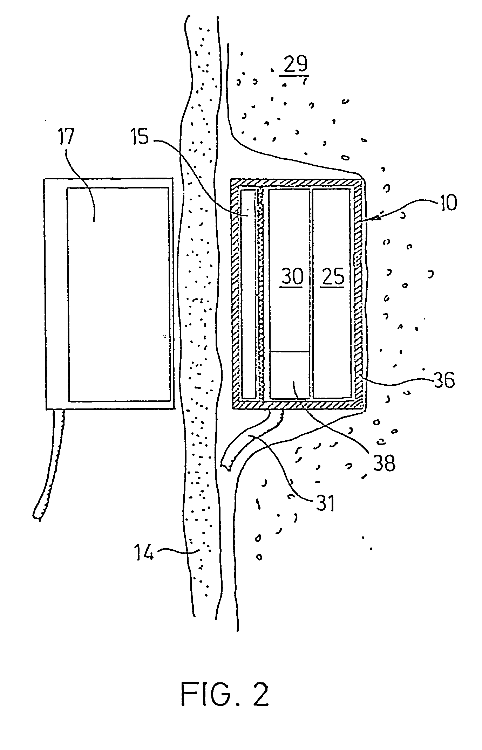

Das Schnittbild nach Fig. 2 zeigt ebenfalls ein Ladesystem zur transkutanen Energieübertragung. Im Gegensatz zu Fig. 1 ist hier jedoch der Empfangsteil 10 des Ladesystems nicht in einem gemeinsamen Gehäuse mit der Hörhilfe, sondern in einem separaten Gehäuse 36 untergebracht. Das im Mastoid 29 implantierte Gehäuse 36 enthält die Empfangsspule 15, eine Ladeelektronik 30, welche beispielsweise die Komponenten 20 bis 24 und 26 bis 28 der Fig. 1 einschließt, sowie die Gleichspannungsquelle 25. Letztere ist über ein Verbindungskabel 31 mit der in Fig. 2 nicht dargestellten Hörhilfe verbunden. Dadurch können die Hörhilfe im Ohr selbst und die implantierbare Energieversorgungseinheit der Hörhilfe an einer besser zugänglichen Stelle, beispielsweise in einer Ausnehmung des Mastoids hinter dem Ohr, angeordnet werden. Zum Laden der Gleichspannungsquelle 25 wird außerhalb der Haut 14 die Sendespule 17 mit der Empfangsspule konzentrisch in Deckung gebracht. Zur Kontrolle der relativen Lage der als Primärspule wirkenden Sendespule 17 zu der die Sekundärspule bildenden Empfangsspule 15 kann der Ladeelektronik 30 eine Telemetrieschaltung 38 zugeordnet sein, die ein für die gegenseitige Ausrichtung der Spulen 15, 17 kennzeichnendes Signal nach außen liefert.

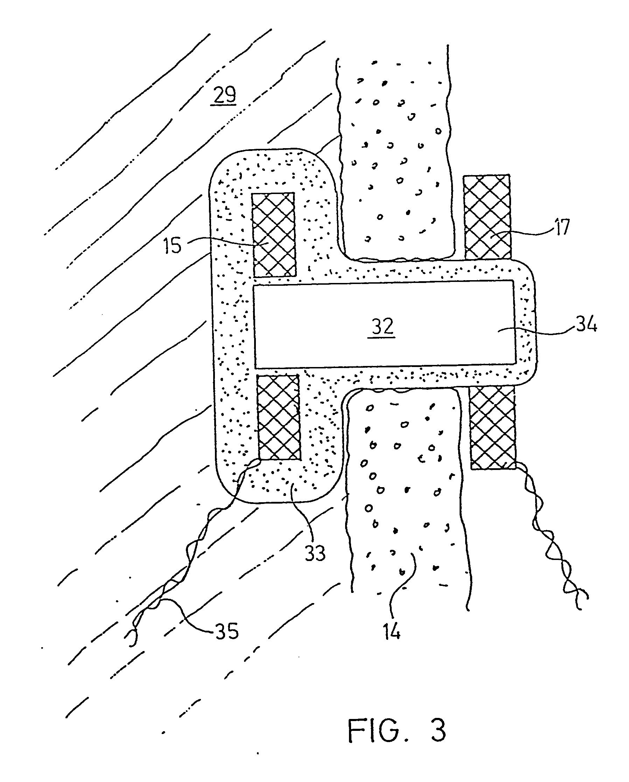

Fig. 3 zeigt eine der Fig. 2 entsprechende Schnittdarstellung für die perkutane Energieübertragung. Die Empfangsspule 15 ist unter der Haut 14 im Mastoid 29 implantiert. Die Spule 15 weist einen Ferritkern 32 auf, dessen über die Spule 15 überstehendes Ende durch die Haut 14 hindurch nach außen geführt ist, wobei die Empfangsspule 15 und der Ferritkern 32 von biokompatiblem Material 33 vollständig umschlossen sind. Zum Laden der Gleichspannungsquelle einer Hörhilfe, die über Zuleitungen 35 mit der Empfangsspule 15 verbunden ist, wird von außen über das äußere Ende 34 des Ferritkerns 32 die Sendespule 17 geschoben. Der Ferritkern 32 dient damit sowohl der mechanischen Fixierung der Sendespule 17 als auch der magnetischen Kopplung der beiden Spulen 15 und 17. Eine solche perkutane Energieübertragung ist wirkungsvoller als die transkutane Übertragung. Das über die Haut vorstehende Ferritkernende 34 kann klein und unauffällig ausgebildet und an versteckter Stelle, insbesondere hinter der Ohrmuschel, angeordnet sein.

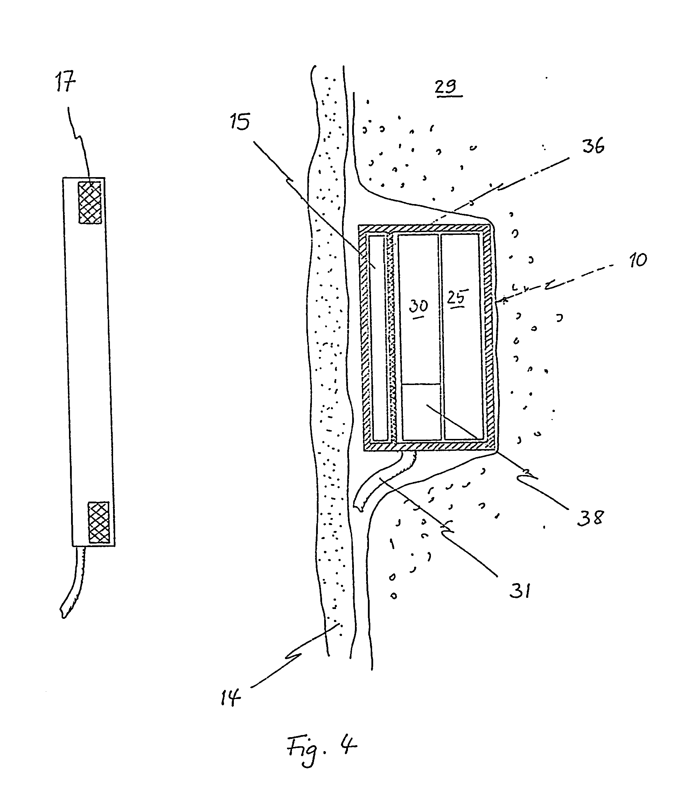

In Fig. 4 ist eine weitere Ausführungsform einer transkutanen Ladestrecke dargestellt. Im Gegensatz zu Fig. 2 liegt die Sendespule 17 des externen Teils des Ladesystems nicht unmittelbar auf der Körperoberfläche (Haut 14) auf, sondern befindet sich in einem gewissen Abstand zu dem Teil der Körperoberfläche, unter der der energieempfangende Teil des Ladesystems (Energieempfangsspule 15, Ladeelektronik 30 und Gleichspannungsquelle 25) implantiert ist. Diese Ausführungsform kommt dann in Betracht, wenn der externe Teil des Ladesystems ortsfest und damit netzgebunden betrieben werden kann und so größere Sendeleistungen zur Verfügung stehen, die eine induktive Energieübertragung über größere Distanzen gestatten. Bei Einbettung der Sendespule in eine entsprechend ausgestaltete Ummantelung kann so zum Beispiel ein Ladesystem realisiert werden, das eine berührungslose Nachladung der implantierten Gleichspannungsqulle während des Schlafes ermöglicht. Eine konzentrische Deckung zwischen Sende- und Empfangsspule, wie sie in Fig.2 dargestellt ist, ist bei zweckentsprechender Geometrie der Sendespule 17 (z.B. ellipsoide Schleifenform mit deutlich größeren geometrischen Abmessungen als die Empfangsspule 15) dann nicht notwendig, solange sich die Empfangsspule 15 im Hauptfeld der magnetischen Induktion befindet.

Bei dem in dem in dem Gehäuse 13 bzw. 37 untergebrachten Gerät 12 kann es sich statt um eine Hörhilfe auch um einen Tinnitus-Maskierer handeln. Während vorstehend Serienresonanzkreise vorgesehen sind, kann grundsätzlich auch mit Parallelresonanzkreisen gearbeitet werden.

## Patentansprüche

1. Ladevorrichtung für implantierbare Hörhilfen und Tinnitus-Maskierer mit einer mehrfach wiederaufladbaren Batterie-Gleichspannungsquelle (25), gekennzeichnet durch einen implantierbaren Teil (10) mit einem als Konstantstromquelle für die zu ladende Gleichspannungsquelle (25) dienenden Empfangs-Serienresonanzkreis (15, 16) und einer Diodenpaare (21, 24; 22, 23) aufweisenden Vollweggleichrichter-Diodenbrückenschaltung, sowie durch einen außerhalb des Körpers anzuordnenden Teil (11) mit einem Sende-Serienresonanzkreis (17, 18), der mit dem Empfangs-Serienresonanzkreis (15, 16) zur Energieübertragung vom Körperäußeren ins Körperinnere induktiv koppelbar ist, wobei der Empfangs-Serienresonanzkreis eine Empfangsspule (15) und einen Kondensator (16) aufweist, die miteinander und mit der Gleichspannungsquelle (25) in Reihe geschaltet sind, und wobei die Empfangsspule (15) und der Kondensator (16) Teil eines Ladekreises (19) sind, der in Abhängigkeit von der Phase des in dem Ladekreis fließenden Ladestroms über das eine (21, 24) oder das andere (22, 23) Diodenpaar schließt.

2. Ladevorrichtung nach Anspruch 1, dadurch gekennzeichnet, daß der Sende-Serienresonanzkreis (17, 18) eine Sendespule (17) aufweist, die zur Energieübertragung durch die geschlossene Haut vom Körperäußeren ins Körperinnere durch unmittelbares Aufsetzen auf die Körperoberfläche mit der Empfangsspule (15) des implantierbaren Empfangs-Serienresonanzkreises (15,16) in Deckung bringbar ist.

3. Ladevorrichtung nach Anspruch 1, dadurch gekennzeichnet, daß der Sende-Serienresonanzkreis (17, 18) eine Sendespule (17) aufweist, die zur Energieübertragung durch die geschlossene Haut vom Körperäußeren ins Körperinnere ohne direkten Kontakt zur Körperoberfläche in Nähe der Empfangsspule (15) des implantierbaren Empfangs-Serienresonanzkreises (15, 16) anordenbar ist.

4. Ladevorrichtung nach Anspruch 1, dadurch gekennzeichnet, daß der Sende-Serienresonanzkreis (17, 18) eine Sendespule (17) aufweist und die Empfangsspule (15) des Empfangs-Serienresonanzkreises (15, 16) mit einem Ferritkern (32) versehen ist, der ein über die Empfangsspule überstehendes Ende (34) aufweist, das zur induktiven und mechanischen Kopplung mit der Sendespule (17) des Sende-Serienresonanzkreises (17, 18) durch die Haut nach außen hindurchführbar ist.

5. Ladevorrichtung nach einem der vorhergehenden Ansprüche, gekennzeichnet durch eine Telemetrieschaltung (38, 45) zur Gewinnung von Information über die relative Position einer Sendespule (17) des Sende-Serienresonanzkreises (17, 18) zu der Empfangsspule (15) des Empfangs-Serienresonanzkreises (15, 16) und/oder von Information über den Ladezustand der Gleichspannungsquelle (25).

6. Ladevorrichtung nach einem der vorhergehenden Ansprüche, dadurch gekennzeichnet, daß in dem implantierbaren Teil (10) der Ladevorrichtung eine Elektronik (20, 27, 28, 44) zur Steuerung und Überwachung des Lade- bzw. Entladevorgangs der Gleichspannungsquelle (25) enthalten ist.

7. Ladevorrichtung nach einem der vorhergehenden Ansprüche, dadurch gekennzeichnet, daß der Empfangs-Serienresonanzkreis (15, 16), die Diodenbrückenschaltung (21, 22, 23, 24) und die Gleichspannungsquelle (25) zusammen mit einer Hörhilfe (12) oder einem Tinnitus-Maskierer in einem gemeinsamen Gehäuse (13) untergebracht sind.

8. Ladevorrichtung nach einem der Ansprüche 1 bis 6, dadurch gekennzeichnet, daß die Gleichspannungsquelle (25), in Kombination mit dem Empfangs-Serienresonanzkreis (15, 16) und der Diodenbrückenschaltung (21, 22, 23, 24), in einem separaten Gehäuse (36) untergebracht ist und mit einer Hörhilfe (12) oder einem Tinnitus-Maskierer lösbar galvanisch verbunden ist.

9. Ladevorrichtung nach einem der vorhergehenden Ansprüche, dadurch gekennzeichnet, daß der implantierbare Teil (10) der Ladevorrichtung zur Implantation im Kopfbereich, vorzugsweise im Mastoid, ausgelegt ist.

10. Ladevorrichtung nach einem der vorhergehenden Ansprüche, dadurch gekennzeichnet, daß der implantierbare Teil (10) der Ladevorrichtung eine Warneinrichtung (44) aufweist, die Warnsignale in den Signalpfad einer Hörhilfe (12) oder eines Tinnitus-Maskierers einspeist, sobald der Ladezustand der Gleichspannungsquelle (25) einen Minimalpegel unterschreitet.

## Claims

1. Charging device for implantable hearing aids and tinnitus masks, having a rechargeable battery DC voltage source (25), characterised by an implantable part (10) with a receiving series resonance circuit (16, 17) acting as a constant current source for the DC voltage source (25) to be charged up and a full wave rectifier diode bridge circuit having diode pairs (21, 24; 22, 23), and characterised by a part (11) to be mounted outside the body with a transmitting series resonance circuit (17, 18), which is inductively couplable to the receiving series resonance circuit (15, 16) in order to transmit power from outside the body into the body, the receiving series resonance circuit having a receiving coil (15) and a capacitor (16), which are connected in series to one another and to the DC voltage source (25), whilst the receiving coil (15) and the capacitor (16) are part of a charging circuit (19) which closes via one or other (22, 23) diode pair, depending on the phase of the charging current flowing in the charging circuit.

2. Charging device according to claim 1, characterised in that the transmitting series resonance circuit (17, 18) has a transmitting coil (17), which in order to transmit power through the closed skin from outside the body to inside the body can be made congruent with the receiving coil (15) of the implantable receiving series resonance circuit (15, 16) by being placed directly on the body surface.

3. Charging device according to claim 1, characterised in that the transmitting series resonance circuit (17, 18) has a transmitting coil (17), which in order to transmit power through the closed skin from outside the body to inside the body can be placed close to the receiving coil (15) of the implantable receiving series resonance circuit (15, 16) without direct contact with the body surface.

4. Charging device according to claim 1, characterised in that the transmitting series resonance circuit (17, 18) has a transmitting coil (17), and the receiving coil (15) of the receiving series resonance circuit (15, 16) is provided with a ferrite core (32) having an end (34) which projects beyond the receiving coil and can be passed through the skin for inductive and mechanical coupling to the transmitting coil (17) of the transmitting series resonance circuit (17, 18).

5. Charging device according to one of the preceding claims, characterised by a telemetric switch (38, 45) for obtaining information about the relative position of a transmitting coil (17) of the transmitting series resonance circuit (17, 18) to the receiving coil (15) of the receiving series resonance circuit (15, 16) and/or information about the charging state of the DC voltage source (25).

6. Charging device according to one of the preceding claims, characterised in that the implantable part (10) of the charging device contains an electronic device (20, 27, 28, 44) for controlling and monitoring the charging or discharging process of the DC voltage source (25).

7. Charging device according to one of the preceding claims, characterised in that the receiving series resonance circuit (15, 16) , the diode bridge circuit (21, 22, 23, 24) and the DC voltage source (25), together with a hearing aid (12) or a tinnitus mask, are housed in a common housing (13).

8. Charging device according to one of claims 1 to 6, characterised in that the DC voltage source (25), in combination with the receiving series resonance circuit (15, 16) and the diode bridge circuit (21, 22, 23, 24), is housed in a separate housing (36) and is galvanically connected in a detachable manner to a hearing aid (12) or tinnitus mask.

9. Charging device according to one of the preceding claims, characterised in that the implantable part (10) of the charging device is adapted for implantation in the head region, preferably in the mastoid.

10. Charging device according to one of the preceding claims, characterised in that the implantable part (10) of the charging device has a warning device (44), which supplies warning signals into the signal path of a hearing aid (12) or tinnitus mask as soon as the charging state of the DC voltage source (25) falls below a minimum level.

## Revendications

1. Dispositif de charge pour appareils de correction auditive et masqueurs de tinnitus implantables, comprenant une source de tension continue à pile (25) rechargeable plusieurs fois, caractérisé par une partie implantable (10) comprenant un circuit récepteur à résonance série (15, 16), servant de source de courant constant pour la source de tension continue (25) que l'on veut charger, et un circuit à pont de diodes de redressement pleine onde comportant des paires de diodes (21, 24 ; 22, 23), ainsi que par une partie (11) qui est disposée à l'extérieur du corps et qui comprend un circuit émetteur à résonance série (17, 18) qui peut être couplé de manière inductive au circuit récepteur à résonance série (15, 16) pour transmettre de l'énergie de l'extérieur du corps à l'intérieur du corps, le circuit récepteur à résonance série comportant une bobine réceptrice (15) et un condensateur (16) qui sont montés en série l'un avec l'autre et avec la source de tension continue (25), et la bobine réceptrice (15) et le condensateur (16) faisant partie d'un circuit de charge (19) qui, en fonction de la phase du courant de charge parcourant le circuit de charge, se ferme par l'intermédiaire de l'une (21, 24) ou de l'autre (22, 23) paire de diodes.

2. Dispositif de charge selon la revendication 1, caractérisé en ce que le circuit émetteur à résonance série (17, 18) comporte une bobine émettrice (17) qui, pour transmettre de l'énergie à travers la peau fermée de l'extérieur du corps à l'intérieur du corps, peut être disposée, par application directe sur la surface du corps, en vis-à-vis de la bobine réceptrice (15) du circuit récepteur implantable à résonance série (15, 16).

3. Dispositif de charge selon la revendication 1, caractérisé en ce que le circuit émetteur à résonance série (17, 18) comporte une bobine émettrice (17) qui, pour transmettre de l'énergie à travers la peau fermée de l'extérieur du corps à l'intérieur du corps, peut être disposée, sans contact direct avec la surface du corps, à proximité de la bobine réceptrice (15) du circuit récepteur implantable à résonance série (15, 16).

4. Dispositif de charge selon la revendication 1, caractérisé en ce que le circuit émetteur à résonance série (17, 18) comporte une bobine émettrice (17), et la bobine réceptrice (15) du circuit récepteur à résonance série (15, 16) est munie d'un noyau de ferrite (32) comportant une extrémité (34) qui fait saillie sur la bobine réceptrice et qui, pour le couplage inductif et mécanique avec la bobine émettrice (17) du circuit émetteur à résonance série (17, 18), peut traverser la peau vers l'extérieur.

5. Dispositif de charge selon l'une des revendications précédentes, caractérisé par un circuit de télémétrie (38, 45) destiné à recueillir des informations sur la position relative d'une bobine émettrice (17) du circuit émetteur à résonance série (17, 18) par rapport à la bobine réceptrice (15) du circuit récepteur à résonance série (15, 16) et/ou des informations sur l'état de charge de la source de tension continue (25).

6. Dispositif de charge selon l'une des revendications précédentes, caractérisé en ce que la partie implantable (10) du dispositif de charge contient une unité électronique (20, 27, 28, 44) pour commander et surveiller le processus de charge ou de décharge de la source de tension continue (25).

7. Dispositif de charge selon l'une des revendications précédentes, caractérisé en ce que le circuit récepteur à résonance série (15, 16), le circuit à pont de diodes (21, 22, 23, 24) et la source de tension continue (25) sont logés, conjointement avec un appareil de correction auditive (12) ou avec un masqueur de tinnitus, dans un boîtier commun (13).

8. Dispositif de charge selon l'une des revendications 1 à 6, caractérisé en ce que la source de tension continue (25), combinée avec le circuit récepteur à résonance série (15, 16) et avec le circuit à pont de diodes (21, 22, 23, 24), est logée dans un boîtier séparé (36) et est connectée de manière galvanique et amovible à un appareil de correction auditive (12) ou à un masqueur de tinnitus.

9. Dispositif de charge selon l'une des revendications précédentes, caractérisé en ce que la partie implantable (10) du dispositif de charge est conçue pour être implantée dans la zone de la tête, de préférence dans la mastoïde.

10. Dispositif de charge selon l'une des revendications précédentes, caractérisé en ce que la partie implantable (10) du dispositif de charge comporte un dispositif avertisseur (44) qui envoie des signaux avertisseurs sur le trajet de signaux d'un appareil de correction auditive (12) ou d'un masqueur de tinnitus dès que l'état de charge de la source de tension continue (25) est inférieur à un niveau minimal.
